# EUROPEAN PATENT APPLICATION

(11) **EP 3 671 171 A1**
(43) Date of publication of application: **24.06.2020**
(21) Application number: 19215657.8
(22) Date of filing: 12.12.2019
(51) Int. Cl.: G01M 11/08, G01L 1/20

(54) **FIBER COMPOSITE COMPONENT HAVING AN INTEGRATED STRUCTURAL HEALTH SENSOR ARRANGEMENT**

(30) Priority: 20.12.2018 DE 102018133010
(71) Applicant: Airbus Operations GmbH, 21129 Hamburg (DE)
(72) Inventor: LINDE, Peter, 21129 Hamburg (DE); ASP, Leif, 43138 Mölndal (SE); ZENKERT, Dan, 18131 Lidingö (SE)
(74) Representative: LKGLOBAL Lorenz & Kopf PartG mbB Patentanwälte

(57) **Abstract**

A fiber composite component having an integrated structural health sensor arrangement is proposed. The component comprises a plurality of layers of fibers embedded in a matrix material, further comprising at least two rupture sensing fibers arranged on or in at least one of the layers, wherein the rupture sensing fibers are carbon fibers having an electrically insulating coating, and wherein the component comprises two electrical connection devices, each being accessible from an outer delimiting surface or an outer edge of the component, wherein the electrical connection devices are connected to different ends of the rupture sensing fibers.

## Description

### TECHNICAL FIELD

The invention relates to a fiber composite component having an integrated structural health sensor arrangement.

### BACKGROUND OF THE INVENTION

Structural health monitoring in aircraft components is well known. In some cases, aircraft components based on a metallic material are be equipped with strain gauges attached to a plurality of positions and connected to an electronic evaluation unit. Due to the characteristic properties of metallic materials, this covers the most interesting events to be detected.

With composite components that usually consist of layers of fibers embedded in a matrix material, additional events of interest may occur, such as delaminations. For detecting delaminations it is a known approach to include an ultrasonic sound transmitter directly into the respective component as well as several sensors at different positions that are susceptible for ultrasonic sound waves. The sensors deliver a signal based on the detected sound waves to an evaluation unit. A suitable evaluation algorithm is capable of analyzing these signals, from which a delamination as well as rough positions of the delamination can be calculated. Hence, the component of interest needs to be heavily modified in order to provide a sufficient health monitoring. Also, precise results are only possible if a sufficient number of sensors are used that are placed at all required positions. Depending on the complexity of the component this requires a lot of effort.

### SUMMARY OF THE INVENTION

It may thus be beneficial to clearly reduce the effort for providing a sufficiently accurate structural health monitoring in a composite component. Consequently, it is the object of the invention to provide a composite component that is equipped or is equipable with a structural health monitoring device that allows a sufficiently accurate health monitoring with a clearly reduced effort for integration of sensors into or onto the component as well as a clearly reduced impact on the design of the component itself.

The object is met by a fiber composite component having an integrated structural health monitoring sensor arrangement with the features of independent claim 1. Advantageous embodiments and further improvements may be gathered from the subclaims and the following description.

It is proposed a fiber composite component having an integrated structural health sensor arrangement, the component comprising a plurality of layers of fibers embedded in a matrix material, further comprising at least two rupture sensing fibers arranged on or in at least one of the layers, wherein the rupture sensing fibers are carbon fibers having an electrically insulating coating, and wherein the component comprises two electrical connection devices, each being accessible from an outer delimiting surface or an outer edge of the component, wherein the electrical connection devices are connected to different ends of the rupture sensing fibers.

Thus, the composite component may comprise a usual design with several layers of reinforcement fibers embedded in a matrix material. It is clear that the composite component may comprise a plurality of layers, each having fibers arranged along at least one certain direction. Preferably, the component according to the invention comprises several layers of fibers arranged in several discrete directions.

For providing a structural health monitoring, some of the fibers of the component slightly differ from the reinforcement fibers and act as rupture sensing fibers. This is advantageous, since the general design of the component is hardly affected, and the mechanical properties do not differ from those of a common composite component. The rupture sensing fibers simply allow to provide the additional function of the rupture sensor, while they still provide the desired reinforcement.

The rupture sensing fibers and the electrical connection devices do not necessarily mesh with the remaining fibers. It may also be feasible to attach the rupture sensing fibers onto a layer of the composite component, such as a prepreg layer or a fiber layer, and to cure the compound together. Thus, one or more layers of interest of the component may comprise an arrangement of rupture sensing fibers on top or directly beneath, wherein all layers may be infused and/or cured together.

The rupture sensing fibers may be coated by an electrically insulating material, such as an electrically insulating monomer or polymer. Thus, they constitute an isolated signal cable in the composite component, which cannot provide a direct electrical contact with other fibers inside the component. The core idea behind using these rupture sensing fibers is the capability of monitoring the component for any damages, such as breaks or ruptures, that occur during its intended use, by monitoring the conductivity of the rupture sensing fibers. For example, both ends of a rupture sensing fiber can be connected to an evaluation unit through the electrical connection devices, wherein the evaluation unit may be adapted to measure the conductivity of the rupture sensing fiber between both ends, at least in certain time intervals. Thus, by measuring a certain conductivity clearly above zero, it can be assumed that the respective rupture sensing fiber is intact. Hence, the area of the component, through which the respective rupture sensing fiber extends, can be assumed to be intact as well. In case a distinctly lower conductivity is detected than expected, which is equal to a distinctly higher electrical resistance than expected, a rupture or break of the area of the component, through which the rupture sensing fiber extends, can be assumed. Thus, the rupture sensing fiber enables to simply monitor the respective component. By using at least two rupture sensing fibers, a rough estimation of the position of the rupture or break can be made. The accuracy is increased with an increased number of rupture sensing fibers arranged at different locations.

The electrical connection device allows to contact all fibers to an evaluation unit, which may preferably be an external evaluation unit. For this, the electrical connection device comprises several inputs, which are connected to the individual fibers as well as several outputs that are accessible from an outer side of the component.

It is to be understood that the rupture sensing fibers preferably extend between from one outer edge to an opposed outer edge of the component, such that it extends through one complete length or width or another geometrical measure of the component. Thus, it is possible to contact the rupture sensing fiber to an evaluation unit or a similar device. Once a rupture or break in the component occurs, through which the rupture sensing fiber extends, said fiber will be interrupted. Thus, it may not provide an electric connection between its two outer ends, which is detectable by monitoring the conductivity, resistance, current flow or similar parameter.

In a preferred embodiment, the at least two rupture sensing fibers are arranged at least in two different halves of a surface extension of the component. Fiber composite components may extend over substantial geometrical dimensions. For example, fuselage shells of modern commercial aircraft may extend over measures that clearly exceed 10 m at least in one direction. It is reasonable to provide rupture sensing fibers in two different halves to provide at least a determination of an affected half or a rough determination of the affected location of the respective component.

Preferably, the component comprises several layers of fibers arranged on top of each other, wherein on or in each of at least two of the layers at least one rupture sensing fiber is arranged. By integrating the rupture sensing fibers into multiple layers of the composite material it is possible to detect the beginning of ruptures in all of these layers. Since the integration of the rupture sensing fibers is rather simple, compared to known methods for integrating ultrasound sensors or other devices, it is worthwhile to include rupture sensing fibers in every third, every second or even every layer. Of course, this may depend on the criticality of the respective component. It may be reasonable to provide two rupture sensors that follow the same direction, such that the same area of the component is monitored in different layers.

Hence, it is preferred if the component comprises several layers of fibers arranged on top of each other, wherein at least two rupture sensing fibers are arranged in or on different layers and extend along the same direction.

In a further advantageous embodiment, the component comprises several layers of fibers arranged on top of each other, wherein two groups of rupture sensing fibers are arranged in at least one of the layers, wherein the rupture sensing fibers of each group extend along the same direction, and wherein the rupture sensing fibers of a first group and of a second group enclose an angle of at least 45° and preferably of 90°. The combination of a first group and a second group of rupture sensing fibers leads to the creation of a sensor grid over the component, which allows to detect ruptures or breaks even more reliably. It is reasonable to arrange the rupture sensors of the two groups of fibers perpendicularly to each other, i.e. at an angle of 90°.

However, if the component comprises a shape that more resembles a triangle or a parallelogram it may be reasonable to adapt the orientation of the rupture sensing fibers of one of the groups to an outer edge of the component, such that the angle between the fibers of the two groups is less than 90°.

For even further improving the structural health monitoring, at least two layers each comprise at least one group of rupture sensing fibers. Thus, a densely-meshed monitoring over the individual layers through many different rupture sensing fibers between the individual layers is possible.

It is preferred to arrange the electrical connection devices at diametrically opposed ends of the component. A first electrical connection device may be connected to first ends of the rupture sensing fibers, while a second electrical connection device may be connected to second ends of the rupture sensing fibers. Hence, by coupling an evaluation device to the electrical connection devices it is possible to monitor each of the rupture sensing fibers, e.g. by selecting respective ports of the electrical connection devices. By arranging the connection devices at diametrically opposed ends the required connection lengths between the respective ends and the associated connection device can be reduced.

It may be preferred if the rupture sensing comprise a solid polymer electrolyte coating. The coating may be provided with a very low thickness, e.g. 0,5 micrometers or slightly above. The coating may be realized in the form of a methoxylated PEG or a methacrylic monomer. As stated above, any electrically insulating monomer or polymer may be used. However, when using a solid polymer electrolyte coating, the rupture sensing fibers may fulfil more than one function and may exemplarily be a part of a structural battery.

It is advantageous if the component is a carbon fiber reinforced component. Hence, there is no change in the mechanical properties and even the rupture sensing fibers contribute to the mechanical stability of the component.

The invention further relates to a Component system with integrated structural health monitoring, comprising at least one fiber composite component according to the above description, and at least one evaluation unit connected to the electrical connection devices of the at least fiber composite component, wherein the evaluation unit is designed to measure the conductivity of the rupture sensing fibers individually and to generate a warning signal if a conductivity of at least one of the rupture sensing fibers is below a predetermined value. Thus, the evaluation unit is able to detect a rupture or a break by measuring the conductivity of the individual rupture sensing fibers and to compare the conductivity with a predetermined value. In practice, this may be conducted in the way of continuity testing. For this, each individual rupture sensing fiber may be integrated into a simple continuity test circuit. For example, such a circuit supplies a low DC voltage to a signal input of the evaluation unit, wherein the voltage is selectively applied to one end of a selected rupture sensor fiber, while the other end is connected to the signal input. In case the signal input detects the voltage, the selected rupture sensor fiber is considered intact. If the signal input does not detect the voltage, it is assumed that the selected rupture sensor fiber is broken. The predetermined value can depend on the used direct voltage source and other boundary conditions. For example, the predetermined value may be adapted to the size of the component and the susceptibility to electromagnetic interferences.

Still further, the evaluation unit may be designed to locate a potential rupture by providing an identification of a detected broken rupture sensor fiber into the warning signal. It may be possible to store an association table in the evaluation, in which geometric information are associated with individual rupture sensing fibers. This may also be conducted for the grid arrangement with a first group of rupture sensing fibers with a first direction of extension and a second group of rupture sensing fibers with a second direction of extension.

The evaluation unit may be designed for conduction the comparison in certain time intervals.

The invention further relates to an aircraft comprising at least one such fiber composite component system.

Finally, the invention relates to the use of a plurality of carbon fibers having an electrically insulating coating integrated into a layer structure of a composite component as rupture sensors in the component.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1 shows a schematic view of a fiber composite component with a rupture sensing fiber integrated therein.
Fig. 2 shows the component 2 of fig. 1 with a rupture.
Fig. 3 shows the component of figs. 1 and 2 with rupture sensing fibers arranged in a grid.
Fig. 4 shows the component in a spatial view having rupture sensing fibers arranged in a grid.
Fig. 5 and 6 show multiple layers of the component with multiple grids of rupture sensing fibers.
Fig. 7 shows a possible process for integrating the rupture sensing fibers.
Fig. 8 shows an aircraft having at least one such component.

### DETAILED DESCRIPTION OF EXEMPLARY EMBODIMENTS

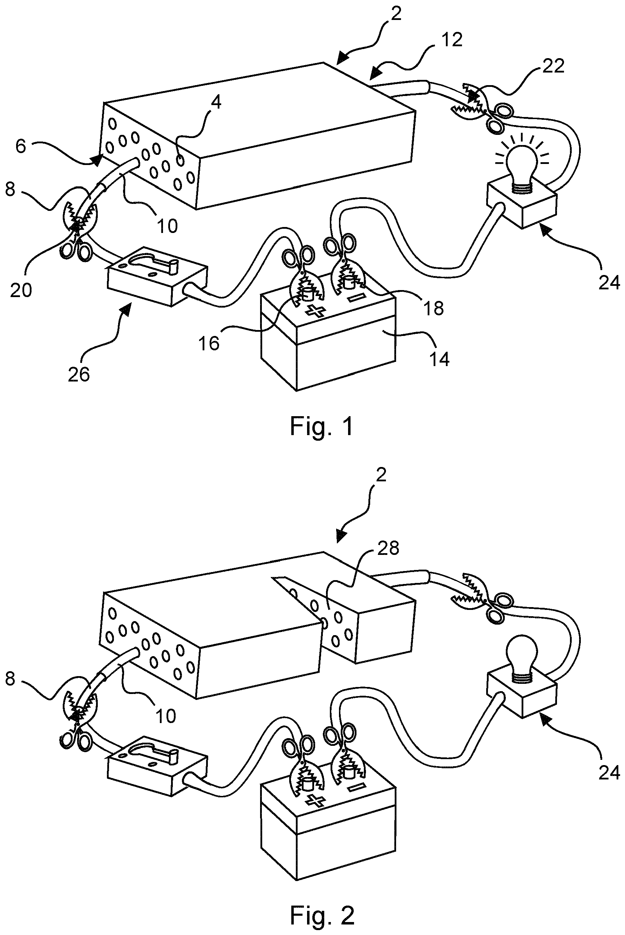

Fig. 1 shows a fiber composite component 2 in a very schematic view to explain an aspect of the present invention. Fibers 4 of the component 2 can be recognized in a first lateral delimiting surface 6 on the left-hand side of the drawing. In an exaggerated illustration, a rupture sensing fiber 8 having an electrically insulating coating 10 extends through the first lateral surface 6 and a second lateral surface 12 at an opposite side of the component 2. The rupture sensing fiber 8 is a carbon fiber, which per se has an electrical conductivity. By providing the electrically insulating coating 10, the rupture sensing fiber 8 substantially has the function of an electrical cable that runs through the component 2. Hence, if the component 2 experiences a break or a rupture, which completely extends through the rupture sensing fiber 8, it is interrupted and thus cannot lead an electrical current from end to end. However, due to the rupture sensing fiber 8 being a carbon fiber, it comprises an exceptional tensile strength.

Also, a direct power source 14 is schematically illustrated and has a first pole 16 and a second pole 18, which are coupled with a first end 20 or a second end 22 of the rupture sensing fiber 8, respectively. Between the second pole 18 and the second end 22 of the rupture sensing fiber 8, an indication unit 24 in the form of a light bulb is provided in a series connection. If a switch 26, which is arranged between the first pole 16 and the first and 20 of the rupture sensing fiber 8 in a series connection is closed, the light bulb 24 lights. This can be interpreted as the rupture sensing fiber 8 being completely intact. The arrangement in Fig. 1 resembles a simple continuity circuit.

As shown in figure 2, the component 2 comprises a rupture 28, which exemplary extends through the rupture sensing fiber 8. Hence, the continuity circuit is interrupted and, consequently, the light bulb 24 does not light up. Consequently, this can be interpreted as the rupture sensing fiber 8 and the component 2 being broken.

For improving the monitoring capabilities, a plurality of rupture sensing fibers 8 can be used. For example, first rupture sensing fibers 30 may be arranged in the component 2 parallel and at a distance to each other. Second rupture sensing fibers 32 are arranged at an angle α to the first rupture sensing fibers 30. The angle α may exemplary be 90°. Hence, a grid of rupture sensing fibers 30 and 32 is created for monitoring the mechanical integrity of the component 2 over a dens mesh.

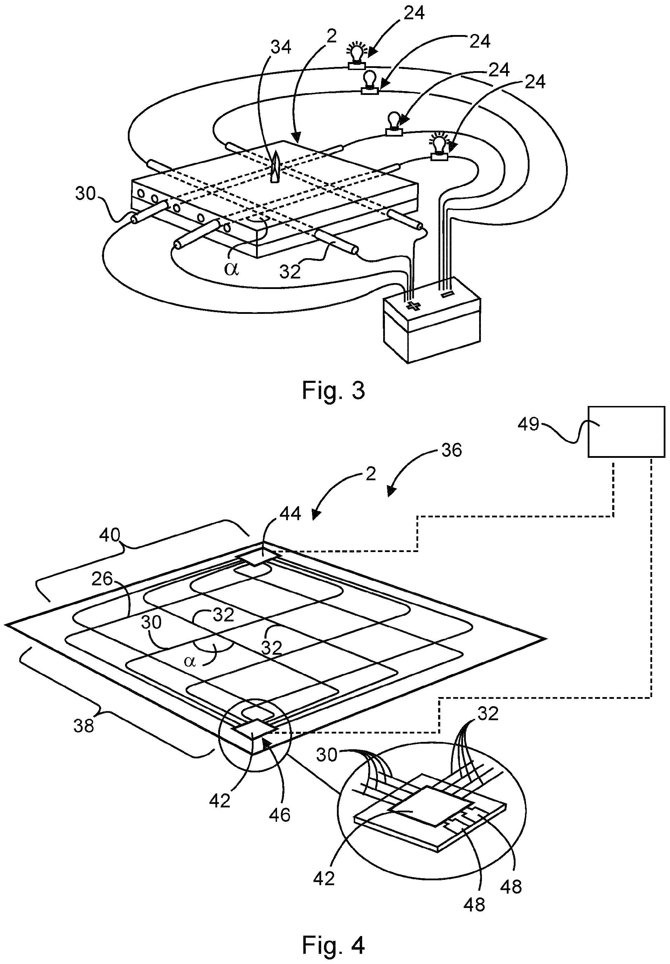

In this illustration, a break 34 in an inner region of the component 2 is shown, which interrupts one of the first rupture sensing fibers 30 and one of the second rupture sensing fibers 32. All other rupture sensing fibers 30 and 32 remain intact. All rupture sensing fibers 30 and 32 are schematically part of four individual continuity circuits. Hence, in this example only two of four light bulbs 24 light up, which allows to at least roughly estimate the location of the break 34. Of course, this is also a very schematic illustration and the actual realization may be based on an electronic evaluation unit coupled with all rupture sensing fibers with a more rigid design, as shown in fig. 4.

In fig. 4 a component system 36 is shown, with the component 2 illustrated in a spatial view. Here, the rupture sensing fibers 30 and 32 are again shown in different orientations and alignments. While Fig. 4 explicitly only shows a single layer, it is clear that the component 2 may comprise a plurality of layers, wherein two or more layers may be equipped like the one shown in Fig. 4.

Again, first rupture sensing fibers 30 are arranged in the component 2 parallel and at a distance to each other. All first rupture sensing fibers 30 constitute a first group 38. Second rupture sensing fibers 32 extend along another direction, are arranged at a distance to each other and, similarly to the first rupture sensing fibers 32, are arranged parallel to each other. Thus, they constitute a second group 40 of rupture sensing fibers. The first rupture sensing fibers 30 and the second rupture sensing fibers 32 enclose an angle α, which in this example is 90°.

A first electrical connection device 42 is embedded into the component 2 and comprises a plurality of inputs coupled with one end of all rupture sensing fibers 30 and 32. At an outer edge 46 of the component 2 a number of outputs 48 are arranged, which allow to couple the rupture sensing fibers with an evaluation unit 49. For connecting the other ends of the rupture sensing fibers 30 and 32, a second electrical connection device 44 is present. Both connection devices 42 and 44 are coupled with the evaluation unit 49 through the outputs 48. The connection devices 42 and 44 and/or the outputs 48 may be adapted to provide a selective contacting of individual rupture sensing fibers 30 and 32 to conduct individual continuity tests.

As a side note, the connection devices 42 and 44 may be coupled with the evaluation unit 49 wirelessly. However, for this a voltage source and a continuity, resistance or current testing device is required in the vicinity of the connection devices 42 and 44 for providing a suitable signal for a wireless transfer to the evaluation unit 49.

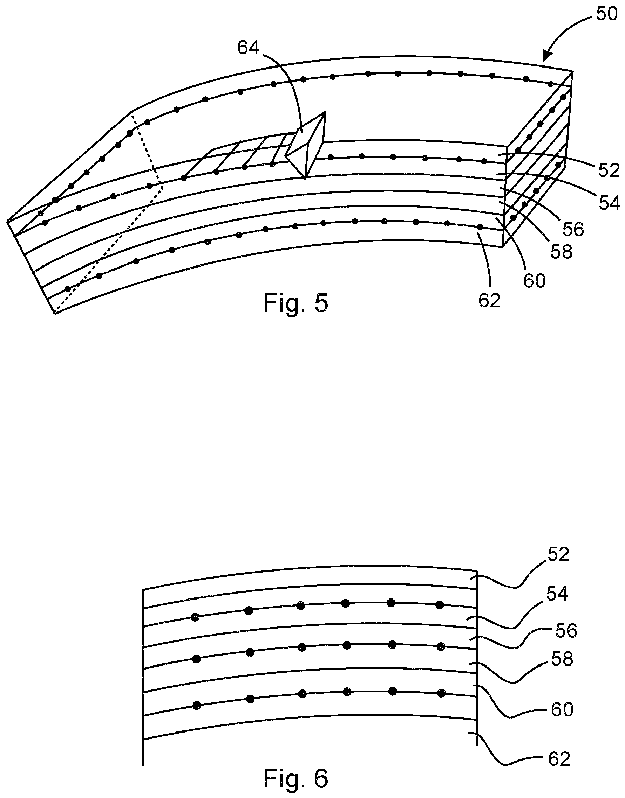

Fig. 5 shows a component 50 having a plurality of layers 52, 54, 56, 58, 60 and 62, wherein each of the layers 52 to 62 may comprise fibers 4 embedded in a matrix material. As an example, the first layer 52 and the sixth layer 62 are each equipped with rupture sensing fibers 30 and 32, which may be arranged as shown in fig. 4. However, in this example, the rupture sensing fibers 30 and 32 are enclosed between the first and second layer 52 and 54 as well as between the fifth and sixth layer 60 and 62.

As apparent, a break 64 occurs in the component 2, which interrupts some of the rupture sensing fibers 30 and 32. Due to the dens mesh of rupture sensing fibers 30 and 32, it can be detected that the break occurs somewhere in the first and second layer 52 and 54 as well as with a certain position along these layers.

As illustrated in fig. 6 this may even further be improved to include still further individual arrangements of rupture sensing fibers 30 and 32 between the third and fourth layers 56 and 58.

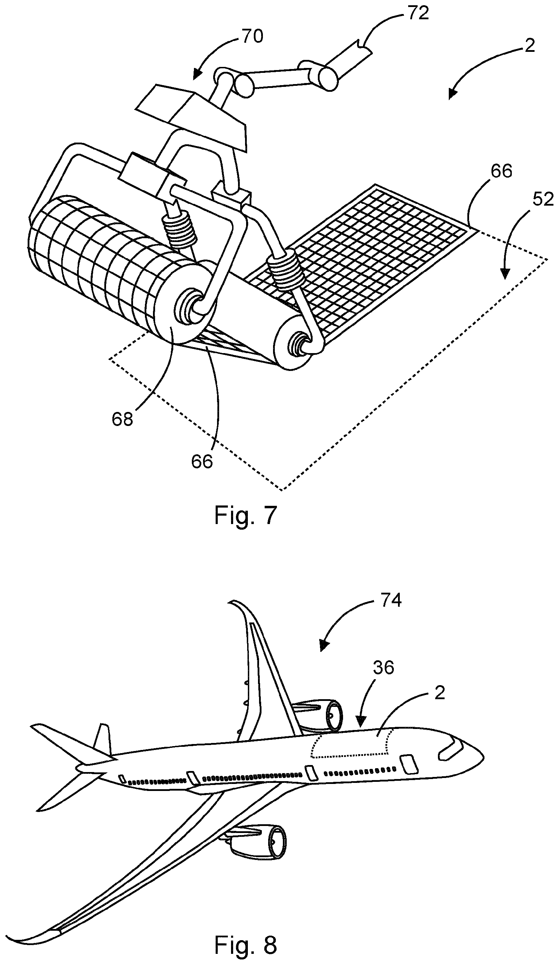

Fig. 7 shows an exemplary process of integrating the rupture sensing fibers 30 and 32 into a component 2 during its manufacturing. Here, exemplarily a first layer 52 is shown, onto which a grid as depicted in fig. 4 is attached. For this, the rupture sensing fibers 30 and 32 are arranged on a transfer foil 66, which is stored on a rotatably supported spool 68. This allows to use a tape placement head 70 arranged on a robotic arm 72 or any other suitable device for transferring the foil 66 onto the respective layer 52. After attaching the transfer foil 66 with the rupture sensing fibers 30 and 32, the transfer foil 66 may be removed from the respective layer 52 and the rupture sensing fibers 30 and 32. Afterwards, the additional second, third and all subsequent layers 54 to 62 can be arranged and the compound of all layers and rupture sensing fibers can be cured.

Finally, figure 8 shows an aircraft 74 having a component system 36 with at least one such component 2. As an example, the component 2 is a part of a fuselage. However, every other part, made of a composite, can be equipped with the rupture sensing fibers according to the invention.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

### REFERENCE NUMERALS

- 2: component
- 4: fiber
- 6: first lateral delimiting surface
- 8: rupture sensing fiber
- 10: electrically insulating coating
- 12: second lateral surface
- 14: direct power source
- 16: first pole
- 18: second pole
- 20: first end
- 22: second end
- 24: indication unit
- 26: switch
- 28: rupture
- 30: first rupture sensing fiber
- 32: second rupture sensing fiber
- 34: break
- 36: component system
- 38: first group
- 40: second group
- 42: first electrical connection device
- 44: second electrical connection device
- 46: outer edge
- 48: output
- 49: evaluation unit
- 50: component
- 52: layer
- 54: layer
- 56: layer
- 58: layer
- 60: layer
- 62: layer
- 64: break
- 66: transfer foil
- 68: spool
- 70: tape placement head
- 72: robotic arm
- 74: aircraft

- α: angle

## Claims

1. Fiber composite component (2, 50) having an integrated structural health sensor arrangement,
the component comprising a plurality of layers (52, 54, 56, 58, 60, 62) of fibers (4) embedded in a matrix material,
further comprising at least two rupture sensing fibers (8, 30, 32) arranged on or in at least one of the layers,
wherein the rupture sensing fibers (8, 30, 32) are carbon fibers having an electrically insulating coating (10), and
wherein the component (2, 50) comprises two electrical connection devices (42, 44), each being accessible from an outer delimiting surface or an outer edge (46) of the component (2, 50), wherein the electrical connection devices (42, 44) are connected to different ends (20, 22) of the rupture sensing fibers (8, 30, 32).

2. Fiber composite component (2, 50) according to claim 1,
wherein the at least two rupture sensing fibers (8, 30, 32) are arranged at least in two different halves of a surface extension of the component (2, 50).

3. Fiber composite component (2, 50) according to claim 1 or 2,
wherein the component (2, 50) comprises several layers of fibers (52, 54, 56, 58, 60, 62) arranged on top of each other, wherein on or in each of at least two of the layers (52, 54, 56, 58, 60, 62) at least one rupture sensing fiber (8, 30, 32) is arranged.

4. Fiber composite component (2, 50) according to any of the preceding claims,
wherein the component (2, 50) comprises several layers of fibers (52, 54, 56, 58, 60, 62) arranged on top of each other, wherein at least two rupture sensing fibers (8, 30, 32) are arranged in or on different layers (52, 54, 56, 58, 60, 62) and extend along the same direction.

5. Fiber composite component (2, 50) according to any of the preceding claims,
wherein the component (2, 50) comprises several layers of fibers (52, 54, 56, 58, 60, 62) arranged on top of each other,
wherein two groups (38, 40) of rupture sensing fibers (8, 30, 32) are arranged in at least one of the layers (52, 54, 56, 58, 60, 62),
wherein the rupture sensing fibers (8, 30, 32) of each group (38, 40) extend along the same direction, and
wherein the rupture sensing fibers (8, 30, 32) of a first group (38) and of a second group (40) enclose an angle (α) of at least 45° and preferably of 90°.

6. Fiber composite component (2, 50) according to claim 5,
wherein at least two layers (52, 54, 56, 58, 60, 62) each comprise at least one group of rupture sensing fibers (38, 40).

7. Fiber composite component (2, 50) according to any of the preceding claims,
wherein the electrical connection devices (42, 44) arranged at diametrically opposed ends of the component (2, 50).

8. Fiber composite component (2, 50) according to any of the preceding claims,
wherein the rupture sensing fibers (8, 30, 32) comprise a solid polymer electrolyte coating.

9. Fiber composite component (2, 50) according to any of the preceding claims,
wherein the component (2, 50) is a carbon fiber reinforced component.

10. Component system (36) with integrated structural health monitoring, comprising
at least one fiber composite component (2, 50) according to claims 1 to 9, and
at least one evaluation unit (49) connected to the electrical connection devices (42, 44) of the at least fiber composite component (2, 50),
wherein the evaluation unit (49) is designed to measure the conductivity of the rupture sensing fibers (8, 30, 32) individually and to generate a warning signal if a conductivity of at least one of the rupture sensing fibers (8, 30, 32) is below a predetermined value.

11. Aircraft (74), comprising at least one component system (36) according to claim 10.

12. Use of a plurality of carbon fibers having an electrically insulating coating (10) integrated into a layer structure of a composite component (2, 50) as rupture sensors in the component (2, 50).
